# FASCICULE DE BREVET EUROPEEN

(11) **EP 2 368 319 B1**
(45) Date de publication et mention de la délivrance du brevet: **06.03.2013**
(21) Numéro de dépôt: 09801753.6
(22) Date de dépôt: 09.12.2009
(51) Int. Cl.: H02K 19/34, H02P 25/22

(54) **DISPOSITIF À MACHINE ÉLECTRIQUE POLYPHASÉE ET MACHINE ÉLECTRIQUE ASSOCIÉE**
EINRICHTUNG MIT EINER ELEKTRISCHEN POLYPHASENMASCHINE UND DIESBEZÜGLICHE ELEKTRISCHE MASCHINE
DEVICE WITH A POLYPHASE ELECTRICAL MACHINE, AND RELATED ELECTRICAL MACHINE

(30) Priorité: 11.12.2008 FR 0806964
(43) Date de publication de la demande: 28.09.2011
(73) Titulaire: Liebherr-Aerospace Toulouse SAS, 31200 Toulouse (FR); Institut National Polytechnique De Toulouse, 31029 Toulouse Cedex 4 (FR); Centre National de la Recherche Scientifique - CNRS, 75016 Paris (FR)
(72) Inventeur: MEYNARD, Thierry, F-31000 Toulouse (FR); LIENHARDT, Anne-Marie, F-31200 Toulouse (FR); DEVANNEAUX, Vincent, F-31300 Toulouse (FR); BRODEAU, Pierre, F-31400 Toulouse (FR); RUELLAND, Régis, F-31140 Saint Loup Cammas (FR); CARAYON, Jean-Pierre, F-31200 Toulouse (FR)
(74) Mandataire: Cabinet BARRE LAFORGUE & associés
(86) Numéro de dépôt international: PCT/FR2009/052466
(87) Numéro de publication internationale: WO 2010/067021

(56) Documents cités:
- EP-A- 1 052 769
- JP-A- 9 182 394
- JP-A- 63 305 793
- JP-A- 2000 324 892
- ANNETTE VON JOUANNE ET AL: "A Dual-Bridge Inverter Approach to Eliminating Common-Mode Voltages and Bearing and Leakage Currents" IEEE TRANSACTIONS ON POWER ELECTRONICS, IEEE SERVICE CENTER, PISCATAWAY, NJ, US, vol. 14, no. 1, 1 janvier 1999 (1999-01-01), XP011043271 ISSN: 0885-8993

## Description

L'invention concerne un dispositif à machine électrique polyphasée dans lequel une pluralité d'onduleurs électroniques, commandés par un signal à modulation de largeur d'impulsion alimentent respectivement une pluralité de sous machines couplées. L'invention concerne également une machine électrique comportant plusieurs sous machines, adaptée pour fonctionner dans un tel dispositif.

Il est connu d'utiliser des onduleurs mono ou polyphasés, alimentés à partir d'une source de courant continu ou redressé, pour fournir un courant alternatif à une machine électrique telle qu'un moteur synchrone par exemple, afin de pouvoir en faire varier la vitesse. Ces onduleurs comportent en général des commutateurs électroniques, tels que des transistors bipolaires à grille isolée (IGBT) montés en pont et permettant de relier une sortie de l'onduleur alternativement au pole positif ou négatif de l'alimentation. Ces onduleurs sont en général commandés par un signal rectangulaire de fréquence fixe (fréquence de découpage) dont la largeur d'impulsion est modulée pour recréer un signal de forme quasi-sinusoïdale en sortie de l'onduleur.

Il est souvent avantageux d'utiliser plusieurs onduleurs en parallèle, pour limiter l'intensité des courants produits par chaque onduleur (donc la taille et le coût des composants qui le constituent) et/ou pour des motifs de redondance, ou encore, grâce à une commande dite entrelacée, dans laquelle les signaux de commande des différents onduleurs sont décalés les uns par rapport aux autres, pour limiter les perturbations appliquées à la source de courant continu lors de l'appel de courant produit par une commutation simultanée des transistors.

On connaît, par exemple du document US 7,109,681, un dispositif de commande d'un moteur synchrone conventionnel à partir de deux onduleurs triphasés produisant un signal en phase à la fréquence fondamentale. Les onduleurs sont pilotés par des signaux de commande hachés déphasés de 180° l'un par rapport à l'autre. Ce déphasage entraine des perturbations qui se superposent au signal d'alimentation du moteur et la fréquence fondamentale et sont filtrées dans le signal résultant par la combinaison des signaux des deux onduleurs dans des transformateurs interphases dont, pour chaque phase, les extrémités sont connectées respectivement à chaque sortie des onduleurs et le point milieu est connecté au moteur.

Il est cependant parfois nécessaire, par exemple pour des questions de redondance au niveau de la machine électrique elle-même, d'utiliser une machine formée de plusieurs sous machines couplées, comme, dans l'exemple d'un moteur synchrone, un moteur comportant plusieurs enroulements stutoriques indépendants, montés en étoile. Ces moteurs sont usuellement appelés moteurs n-étoiles, n correspondant au nombre d'enroulements statoriques distincts.

En associant à chaque sous machine un onduleur et en pilotant les onduleurs par une commande entrelacée, les inventeurs ont constaté que les perturbations connues du signal alternatif de commande du moteur et attribuées à des circulations instantanées de courants entre les sorties des onduleurs reliées galvaniquement dans la technique antérieure étaient également présentes dans ce montage où les onduleurs sont isolés galvaniquement entre eux.

Il a été également constaté que ces perturbations entrainaient des courants parasites dans le moteur, générant des échauffements et des pertes de rendement par effet Joule, par courants de Foucault et par hystérésis, par exemple.

On connait du document JP 63 305793 un dispositif d'alimentation d'un moteur électrique asynchrone polyphasé comportant un bobinage à deux étoiles. Chaque étoile est alimentée par un convertisseur qui lui est propre. Afin de limiter la taille du condensateur de filtrage de l'alimentation continue des convertisseurs, ceux-ci sont pilotés par une commande entrelacée modulée en largeur d'impulsion. Chaque convertisseur alimente directement chaque étoile, et chaque phase de chaque étoile présente une inductance mutuelle négative avec la phase homologue de l'autre étoile.

Cependant, si ce dispositif peut donner satisfaction dans le cas d'un moteur électrique présentant ce bobinage particulier, il n'est pas adapté pour un moteur électrique préexistant dont les phases de chaque étoile présentent usuellement une inductance mutuelle positive avec les phases homologues des autres étoiles

L'invention vise donc à résoudre ce problème sans pour autant sacrifier l'isolement galvanique des différents sous ensembles onduleur / sous machine, comme cela aurait été avec la solution de la technique antérieure.

L'invention vise à fournir un dispositif à machine électrique permettant d'utiliser une alimentation fractionnée par des onduleurs à commande entrelacée avec les machines électriques actuelles sans qu'il soit besoin de les modifier.

Pour ce faire, l'invention concerne un dispositif à machine électrique polyphasée, du type comportant :
- une machine électrique comprenant au moins :
   - une carcasse en matériau ferromagnétique formant un circuit magnétique,
   - un bobinage de fil conducteur comportant au moins un élément d'enroulement par phase, les éléments d'enroulement étant adaptés pour être connectés entre eux selon une structure en étoile, le bobinage comportant au moins deux groupes d'éléments d'enroulement distincts, dits étoiles, comportant chacun, pour chaque phase, un enroulement de phase constitué d'au moins un élément d'enroulement, les enroulements de phase de chaque étoile étant connectés entre eux selon une structure en étoile,
- un dispositif de commande, comportant une pluralité d'onduleurs adaptés pour :
   - être alimentés en courant continu ou redressé,
   - être pilotés par une commande entrelacée modulée en largeur d'impulsion à une fréquence de découpage identique entre les onduleurs,
   - fournir sur leurs sorties de phase, un signal de tension alternatif de fréquence fondamentale, d'amplitude et de phase identique entre les sorties de phase homologues de chaque onduleur,
caractérisé en ce que pour chaque paire d'étoile, les circuits de phase comportent, en serie avec les enroulements de phase homologues desdites étoiles, respectivement le primaire et le secondaire d'un transformateur de couplage présentant un couplage negatif entre primaire et secondaire, ledit couplage étant adapté pour former en combinaison avec le couplage respectif des enroulements de phase homologues desdites étoiles, une inductance mutuelle résultante négative.

Le couplage négatif ainsi réalisé entre les circuits de phase homologues de la machine permet de minimiser la circulation parasite des courants dans les branches des onduleurs correspondant aux phases homologues, entrainée par la commutation à des instants différents des transistors.

On peut ainsi par un coupleur externe compenser le couplage généralement positif rencontré dans les machines multi-étoiles courantes entre les enroulements de phase homologues, couplage qui entraine une circulation différentielle parasite de courant qui se superpose au signal à la fréquence fondamentale. Le couplage négatif entre les circuits de phase homologues est obtenu sans sacrifier l'isolement galvanique des circuits entre eux grâce au transformateur de couplage.

L'invention s'étend également à un dispositif à machine électrique polyphasée, du type comportant :
- une machine électrique comprenant au moins :
- une carcasse en matériau ferromagnétique formant un circuit magnétique.
- un bobinage de fil conducteur comportant au moins un élément d'enroulement par phase, les éléments d'enroulement étant adaptés pour être connectés entre eux selon une structure en étoile, le bobinage comportant au moins deux groupes d'éléments d'enroulement distincts, dits étoiles, comportant chacun, pour chaque phase, un enroulement de phase constitué d'au moins un élément d'enroulement, les enroulements de phase de chaque étoile étant connectés entre eux selon une structure en étoile,
- un dispositif de commande, comportant une pluralité d' onduleurs adaptés pour :
- être alimentés en courant continu ou redressé,
- être pilotés par une commande entrelacée modulée en largeur d'impulsion à une fréquence de découpage identique entre les onduleurs,
- fournir sur leurs sorties de phase, un signal de tension alternatif de fréquence fondamentale, d'amplitude et de phase identique entre les sorties de phase homologues de chaque onduleur,
   chaque étoile étant alimentée par au moins un onduleur associé, connecté directement par ses sorties de phase respectives aux enroulements de phase respectifs des étoiles de la machine électrique ,
   caractérisé en ce que la machine électrique est un transformateur de tension comportant :
- une carcasse ferromagnétique comprenant
   - un noyau intermédiaire par phase, comprenant une pluralité de noyaux primaires connectés par une culasse intermédiaire à un noyau secondaire,
   - une culasse primaire refermant un circuit magnétique primaire constitué des noyaux primaires de toutes les phases de la carcasse,
   - une culasse secondaire refermant un circuit magnétique secondaire constitué des noyaux secondaires de toutes les phases de la carcasse,
- un bobinage de fil conducteur comportant
   - au moins un enroulement secondaire par phase, bobiné autour de chaque noyau secondaire, dont l'une des extrémités est reliée aux autres enroulements secondaires en un neutre commun, et l'autre extrémité est reliée à une borne de sortie du transformateur,
   - un enroulement primaire par phase et par onduleur, bobiné autour d'un noyau primaire de la phase correspondante, les enroulements primaires étant bobinés selon un même sens d'enroulement sur leur noyau et les enroulements primaires des phases d'un même onduleur étant reliés par une extrémité en un neutre commun et par l'autre extrémité aux sorties de phase respectives des onduleurs de manière à ce que les enroulements de phase homologues des étoiles, prises deux à deux, présentent une inductance mutuelle négative.

L'invention concerne également un dispositif à machine électrique et un moteur électrique caractérisés en combinaison par tout ou partie des caractéristiques mentionnées ci-dessus ou ci-après.

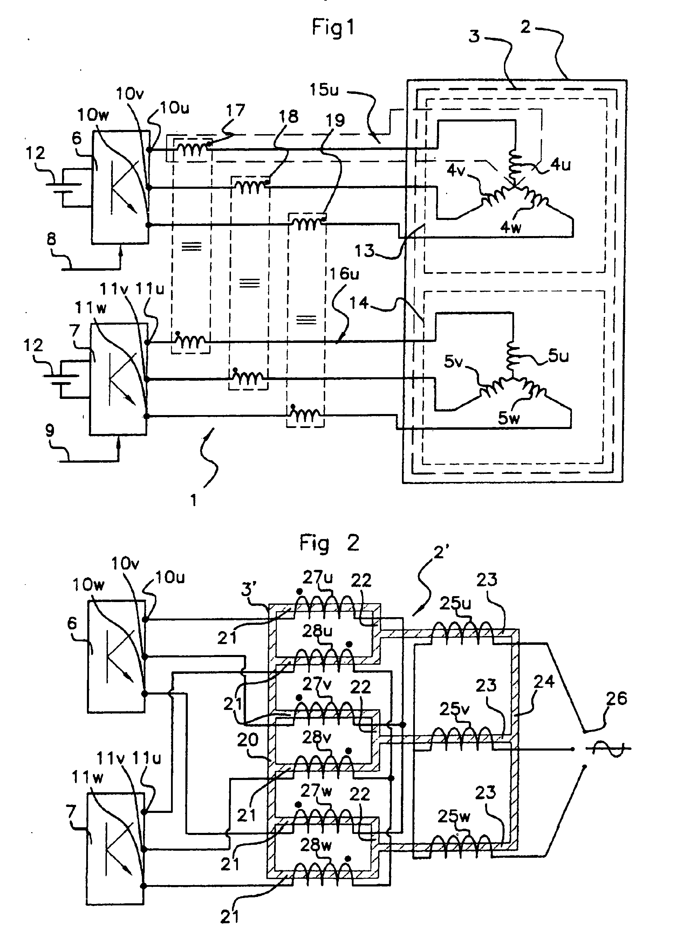

D'autres buts, caractéristiques et avantages de l'invention apparaîtront au vu de la description qui va suivre et des dessins annexés dans lesquels.
■ la figure 1 représente un dispositif selon un premier mode de réalisation de l'invention comportant une machine triphasée bi-étoile alimentée par deux onduleurs au travers d'un coupleur externe.
■ la figure 2 représente schématiquement un dispositif selon le second mode de réalisation de l'invention appliqué à un transformateur triphasé bi-étoile alimenté par deux onduleurs.

Dans la description qui va suivre, on désigne par machine électrique non seulement une machine proprement dite transforment de l'énergie électrique en énergie mécanique (moteur) ou réciproquement (génératrice) mais également et par extension un dispositif apte à transformer de l'énergie électrique sous une première forme en une énergie électrique sous une seconde forme en utilisant les propriétés électromagnétiques d'un courant électrique variable dans une ou plusieurs spires conductrices, tel qu'un transformateur de tension par exemple.

On désigne également par bobinage l'ensemble des conducteurs électriques, usuellement en fils de cuivre isolés par un vernis, formant les différents enroulements et éléments d'enroulement de la machine électrique ou de son stator, généralement bobinés sur ou autour d'une « carcasse » formée d'un empilement de tôles de fer doux ou autre matériau ferromagnétique. On appelle « étoile » selon la terminologie en usage en électrotechnique, un enroulement constitué d'au moins un élément d'enroulement (ensemble de spires formées d'une même longueur de fil conducteur) par phase, ces éléments d'enroulement étant reliés entre eux par une première extrémité en un point central appelé neutre et par leur seconde extrémité respectivement à l'une des phases du courant d'alimentation. Ainsi en courant triphasé, une étoile comporte trois branches, chacune formée d'un ou plusieurs éléments d'enroulements reliés d'une part ensemble au point neutre et d'autre part respectivement à l'une des trois phases usuellement repérées par les lettres u, v, et w. Chacune des branches de l'étoile est désignée dans la suite par le terme d'enroulement de phase, les enroulements de phase de plusieurs étoiles correspondant à la même phase étant dits « homologues ».

La figure 1 représente un dispositif 1 comprenant une machine électrique 2 comportant deux étoiles 13 et 14 bobinées sur une même carcasse 3. L'étoile 13 comporte trois enroulements de phase 4u, 4v et 4w de même que l'étoile 14 comporte trois enroulements de phase 5 u, 5v et 5w, respectivement homologues des précédents.

Selon le constat fait par les inventeurs, les machines de ce type sont en général bobinées de telle sorte que les enroulements de phase homologues, par exemple 4u et 5u, présentent entre eux une inductance mutuelle positive. Ceci ne présente aucun inconvénient lorsque les enroulements de phase sont alimentés par une même tension ou deux tensions identiques parfaitement en phase. En effet, la tension aux bornes des enroulements de phase homologues est alors identique à tout instant et le couplage entre ces enroulements de phase ne cause aucun effet propre.

Dans le dispositif considéré à la figure 1, chaque étoile 13, 14 est alimentée respectivement par les sorties de phase 10u, 10v 10w et 11u, 11v, 11w d'un onduleur 6, 7 qui lui est propre. Ces onduleurs sont eux-mêmes alimentés par des sources 12 de courant continu ou redressé, connectées entre elles ou indépendantes.

Les onduleurs 6 et 7 sont commandés de manière à délivrer, sur leurs sorties de phase homologues 10u et 11u (respectivement 10v et 11v et 10w et 11w) une tension d'alimentation hachée à une fréquence de découpage commune, composée d'échelons de tension comportant deux niveaux (ou plus selon la structure des étages de sortie des onduleurs) formant un signal rectangulaire modulé par largeur d'impulsion à la fréquence de découpage visant à recréer par sa moyenne glissante une onde fondamentale dont les caractéristiques de fréquence, d'amplitude et de phase correspondant aux valeurs souhaitées pour l'alimentation de la machine 2 et sont identiques pour les sorties de phase homologues des onduleurs.

Il est cependant fréquent, en particulier dans le domaine des transports, lorsque la machine 2 est une machine embarquée dans un avion ou un train, que les onduleurs soient alimentés par la même source faisant partie du réseau de bord. Des lors, il est courant de piloter les onduleurs par des commandes respectives 8 et 9 qui sont dites entrelacées, c'est-à-dire telles que les transistors des onduleurs ne soient pas commandés simultanément afin d'éviter d'introduire trop de perturbations sur le réseau de bord.

De ce fait, les tensions instantanées aux bornes des sorties de phase homologues des onduleurs peuvent être différentes, et si ces sorties sont directement connectées aux enroulements de phase respectifs des étoiles 13 et 14, génèrent des courants différentiels dans les enroulements de phase du fait de leur couplage positif, courants qui provoquent des pertes tant par effet Joule dans les conducteurs des enroulements que par hystérésis dans la carcasse, et entraînent un échauffement de la machine préjudiciable à son bon fonctionnement.

Avantageusement, dans le dispositif selon l'invention, la sortie de phase 10u de l'onduleur 6 est reliée à l'enroulement de phase 4u de l'étoile 13 par l'intermédiaire du primaire d'un transformateur de couplage 17 dont le secondaire est en série entre la sortie de phase 11u de l'onduleur 7 et l'enroulement de phase 5u de l'étoile 14. Les éléments d'enroulement du primaire et du secondaire du transformateur de couplage 17 possèdent le même nombre de tours, mais sont bobinés de manière à offrir un couplage négatif entre primaire et secondaire. Leur inductance est choisie de manière à ce que le circuit de phase 15u comprenant en série le primaire du transformateur de couplage 17 et l'enroulement de phase 4u présente un couplage résultant négatif vis-à-vis du circuit de phase 16u homologue, comprenant en série le secondaire du transformateur de couplage 17 et l'enroulement de phase 5u.

De cette manière, les sorties de phase 10u et 11u voient à leur borne des circuits de phase 15u et 16u dont l'inductance mutuelle est négative. Dès lors, une tension différentielle aux bornes des sorties de phase 10u et 11u ne génère pas de courant de circulation dans les enroulements de phase de la machine électrique et les effets négatifs de ces courants sont atténués.

De manière corollaire, les enroulements de phase 4v et 5v sont montés en série respectivement avec le primaire et le secondaire d'un transformateur de couplage 18, le primaire et le secondaire étant bobinés de manière à présenter un couplage négatif entre eux. Ainsi les circuits de phase homologues comprenant respectivement le primaire du transformateur de couplage 18 et l'enroulement de phase 4v d'une part et le secondaire du transformateur de couplage 18 et l'enroulement de phase 5v d'autre part, présentent une inductance mutuelle résultante négative.

Il en va de même pour la troisième phase w, pour laquelle le couplage négatif introduit par le transformateur de couplage 19 forme en combinaison avec le couplage respectif des enroulements de phase 4w et 5w, un couplage résultant tel que les circuits de phase homologues présentent une inductance mutuelle négative.

On a ainsi constaté qu'avec un coupleur externe comportant les trois transformateurs de couplage 17, 18 et 19, à couplage négatif, il était possible de compenser le couplage positif des enroulements de phase d'un moteur double étoile classique afin d'en permettre l'alimentation et la commande à partir d'onduleurs distincts pilotés en commande entrelacée. En outre, l'isolement galvanique entre chaque étoile et son onduleur associé est préservé, permettant ainsi une plus grande sécurité de fonctionnement dans le cas où l'une des sous machines associées à chaque étoile présenterait une défaillance électrique.

Bien entendu, cette disposition est extensible à des moteurs comportant un plus grand nombre d'étoiles ou de phases. Il est alors nécessaire de prévoir un transformateur de couplage pour chaque phase et pour chaque paire d'étoile.

Le dispositif décrit ci-avant en relation avec une machine tournante peut également être étendu à un transformateur, par exemple un transformateur élévateur de tension, dans lequel la partie primaire est réalisée sous la forme d'une pluralité d'enroulements en parallèle, chacun d'eux alimenté par un onduleur propre. Dans le cas d'un transformateur tel que celui illustré à la figure 2. deux onduleurs 6 et 7 similaires à ceux de la figure 1 alimentent par leurs sorties de phase respectives 10u, 10v et 10w d'une part et 11u, 11v et 11w d'autre part, la partie primaire d'un transformateur 2'. Le transformateur 2' comprend une carcasse 3' en matériau ferromagnétique, par exemple constituée d'un assemblage de tôles d'acier doux, constitué d'une première culasse 20, dite culasse primaire, a laquelle sont reliés une pluralité de noyaux primaires 21 autour desquels sont bobinés respectivement des enroulements primaires 27u, 27v, 27w et 28u, 28v, 28w correspondant aux différentes phases u, v, w des onduleurs 6 et 7. Les noyaux primaires correspondant aux deux enroulements primaires homologues 27u et 28u sont reliés entre eux, du coté opposé à la culasse primaire 20 par une culasse intermédiaire 22. Un noyau secondaire 23 est solidaire de la culasse intermédiaire 22 par l'une de ses extrémités et porte un enroulement de phase 25u, correspondant à la phase résultante u au secondaire du transformateur. Les deux noyaux primaires 21, la culasse intermédiaire 22 qui les relie et le noyau secondaire 23 forment un noyau intermédiaire correspondant à une des phases d'alimentation du transformateur. Une culasse secondaire 24 referme les lignes de champ entre les extrémités des noyaux secondaires 23 de toutes les phases, du coté opposé aux culasses intermédiaires 22.

Les enroulements primaires 27u, 27v et 27w sont connectés à l'une de leurs extrémités aux sorties de phase 10u, 10v et 10w de l'onduleur 6 et sont reliés ensemble en un point neutre à l'autre extrémité. Le même montage en étoile s'applique aux enroulements primaires reliés à l'onduleur 7.

Les enroulements secondaires 25u, 25v et 25w sont eux aussi montés en étoile, reliés ensemble à un point neutre par l'une de leurs extrémités et à une borne 26 de connexion à un réseau aval (non représenté) par l'autre.

Les enroulements primaires homologues 27u et 28u sont bobinés sur leur noyau respectif de façon à présenter un couplage négatif entre eux. De cette manière les flux générés dans les noyaux primaires sous l'influence d'un courant identique de mode commun dans les enroulements 27u et 28u sont canalisés par la culasse intermédiaire 22 dans le noyau secondaire 23 alors que les courants différentiels liés aux déphasages des fréquences de découpage des onduleurs sont filtrés dans le transformateur de découplage formé par les deux enroulements 27u et 28u, leur noyau primaire, la culasse intermédiaire 22 et la partie de la culasse primaire 20 correspondant aux noyaux considérés.

Bien entendu, cette description est donnée à titre d'exemple illustratif uniquement et l'homme du métier pourra y apporter de nombreuses modifications sans sortir de la portée de l'invention, comme par exemple appliquer l'enseignement apporté par la description ci-dessus à un dispositif comportant une machine électrique du type génératrice, dans lequel le courant généré dans les multiples étoiles de la génératrice est redressé et régulé par des régulateurs à découpage fonctionnant avec une commande à modulation de largeur d'impulsion entrelacée.

## Revendications

1. Dispositif (1) à machine électrique polyphasée, du type comportant :
- une machine électrique (2) comprenant au moins :
- une carcasse (3) en matériau ferromagnétique formant un circuit magnétique,
- un bobinage de fil conducteur comportant au moins un élément d'enroulement par phase, les éléments d'enroulement étant adaptés pour être connectés entre eux selon une structure en étoile, le bobinage comportant au moins deux groupes d'éléments d'enroulement distincts, dits étoiles (13, 14), comportant chacun, pour chaque phase, un enroulement de phase (4u, 4v, 4w, 5u, 5v, 5w, 33u-w, 34u-w, 35u-w) constitué d'au moins un élément d'enroulement, les enroulements de phase de chaque étoile étant connectés entre eux selon une structure en étoile,
- un dispositif de commande, comportant une pluralité d'onduleurs (6, 7, 36, 37, 38) adaptés pour :
- être alimentés en courant continu ou redressé,
- être pilotés par une commande (8, 9) entrelacée modulée en largeur d'impulsion à une fréquence de découpage identique entre les onduleurs,
- fournir sur leurs sorties de phase (10u, 10v, 10w ; 11u, 11v, 11w), un signal de tension alternatif de fréquence fondamentale, d'amplitude et de phase identiques entre les sorties de phase homologues de chaque onduleur,
chaque étoile étant alimentée par au moins un onduleur associé, connecté par ses sorties de phase respectives à un circuit de phase comprenant les enroulements de phase respectifs de l'étoile,
**caractérisé en ce que** pour chaque paire d'étoile, les circuits de phase (15u, 16u) comportent, en série avec les enroulements de phase homologues desdites étoiles, respectivement le primaire et le secondaire d'un transformateur de couplage (17, 18, 19) présentant un couplage négatif entre primaire et secondaire, ledit couplage étant adapté pour former en combinaison avec le couplage respectif des enroulements de phase homologues desdites étoiles, une inductance mutuelle résultante négative.

2. Dispositif (1) à machine électrique polyphasée, du type comportant :
- une machine électrique (2) comprenant au moins :
- une carcasse (3) en matériau ferromagnétique formant un circuit magnétique,
- un bobinage de fil conducteur comportant au moins un élément d'enroulement par phase, les éléments d'enroulement étant adaptés pour être connectés entre eux selon une structure en étoile, le bobinage comportant au moins deux groupes d'éléments d'enroulement distincts, dits étoiles (13, 14), comportant chacun, pour chaque phase, un enroulement de phase (4u, 4v, 4w, 5u, 5v, 5w, 33u-w, 34u-w, 35u-w) constitué d'au moins un élément d'enroulement, les enroulements de phase de chaque étoile étant connectés entre eux selon une structure en étoile,
- un dispositif de commande, comportant une pluralité d'onduleurs (6, 7, 36, 37, 38) adaptés pour :
- être alimentés en courant continu ou redressé,
- être pilotés par une commande (8, 9) entrelacée modulée en largeur d'impulsion à une fréquence de découpage identique entre les onduleurs,
- fournir sur leurs sorties de phase (10u, 10v, 10w ; 11u, 11v, 11w), un signal de tension alternatif de fréquence fondamentale, d'amplitude et de phase identiques entre les sorties de phase homologues de chaque onduleur,
chaque étoile étant alimentée par au moins un onduleur associé, connecté directement par ses sorties de phase respectives aux enroulements de phase respectifs des étoiles de la machine électrique ,
**caractérisé en ce que** la machine électrique (2) est un transformateur de tension comportant :
- une carcasse ferromagnétique (3) comprenant
- un noyau intermédiaire par phase, comprenant une pluralité de noyaux primaires (21) connectés par une culasse intermédiaire (22) à un noyau secondaire (23),
- une culasse primaire (20) refermant un circuit magnétique primaire constitué des noyaux primaires de toutes les phases de la carcasse,
- une culasse secondaire (24) refermant un circuit magnétique secondaire constitué des noyaux secondaires de toutes les phases de la carcasse,
- un bobinage de fil conducteur comportant
- au moins un enroulement secondaire (25) par phase, bobiné autour de chaque noyau secondaire, dont l'une des extrémités est reliée aux autres enroulements secondaires en un neutre commun, et l'autre extrémité est reliée à une borne de sortie (26) du transformateur,
- un enroulement primaire (27uvw, 28uvw) par phase et par onduleur (6, 7), bobiné autour d'un noyau primaire (21) de la phase correspondante, les enroulements primaires étant bobinés selon un même sens d'enroulement sur leur noyau et les enroulements primaires des phases d'un même onduleur étant reliés par une extrémité en un neutre commun et par l'autre extrémité aux sorties de phase (10uvw, 11uvw) respectives des onduleurs de manière à ce que les enroulements de phase homologues des étoiles, prises deux à deux, présentent une inductance mutuelle négative.

## Claims

1. A device (1) having a polyphase electrical machine, of the type including:
- an electrical machine (2) comprising at least:
- a casing (3) of ferromagnetic material forming a magnetic circuit,
- a conductive wire coil including at least one winding element per phase, the winding elements being suitable for connection to one another in a star structure, the coil including at least two separate groups of winding elements, called stars (13, 14), each of which includes for each phase a phase winding (4u, 4v, 4w, 5u, 5v, 5w, 33u-w, 34u-w, 35u-w) formed by at least one winding element, the phase windings of each star being connected to one another in a star structure,
- a control device including a plurality of inverters (6, 7, 36, 37, 38) which are suitable for:
- being supplied with direct or rectified current,
- being driven by a pulse width modulated interlocked controller (8, 9) having the identical switching frequency between the inverters,
- providing at their phase outputs (10u, 10v, 10w; 11u, 11v, 11w) an alternating voltage signal of identical fundamental frequency, amplitude and phase between the outputs of the same phase of each inverter,
each star being supplied with at least one associated inverter which is connected by its respective output phases to a phase circuit comprising the respective phase windings of the star,
**characterised in that**, for each star pair, the phase circuits (15u, 16u) include, in series with the windings of the same phase of said stars, respectively the primary and the secondary windings of a coupling transformer (17, 18, 19) which is negatively coupled between the primary and the secondary windings, said coupling being suitable for forming, when combined with the respective coupling of the windings of the same phase of said stars, a resultant negative mutual inductance.

2. A device (1) having a polyphase electrical machine, of the type including:
- an electrical machine (2) comprising at least:
- a casing (3) of ferromagnetic material forming a magnetic circuit,
- a conductive wire coil including at least one winding element per phase, the winding elements being suitable for connection to one another in a star structure, the coil including at least two separate groups of winding elements, called stars (13, 14), each of which includes for each phase a phase winding (4u, 4v, 4w, 5u, 5v, 5w, 33u-w, 34u-w, 35u-w) formed by at least one winding element, the phase windings of each star being connected to one another in a star structure,
- a control device including a plurality of inverters (6, 7, 36, 37, 38) which are suitable for:
- being supplied with direct or rectified current,
- being driven by a pulse width modulated interlocked controller (8, 9) having an identical switching frequency between the inverters,
- providing at their phase outputs (10u, 10v, 10w; 11u, 11v, 11w) an alternating voltage signal of identical fundamental frequency, amplitude and phase between the outputs of the same phase of each inverter,
each star being supplied with at least one associated inverter which is directly connected by its respective output phases to the respective phase windings of the stars of the electrical machine, **characterised in that** the electrical machine (2) is a voltage transformer including:
- a ferromagnetic casing (3) comprising
- an intermediate core per phase, comprising a plurality of primary cores (21) connected by way of an intermediate yoke (22) to a secondary core (23),
- a primary yoke (20) which encloses a primary magnetic circuit formed by the primary cores of all the phases of the casing,
- a secondary yoke (24) which encloses a secondary magnetic circuit formed by the secondary cores of all the phases of the casing,
- a conductive wire coil including
- at least one secondary winding (25) per phase, wound around each secondary core, whereof one of the ends is connected to the other secondary windings at a common neutral point and the other end is connected to an output terminal (26) of the transformer,
- one primary winding (27uvw, 28uvw) per phase and per inverter (6, 7), wound around a primary core (21) of the corresponding phase, the primary windings being wound in a single direction of winding onto their core and the primary windings of the phases of a single inverter being connected by one end at a common neutral point and by the other end to the respective phase outputs (10uvw, 11uvw) of the inverters such that the windings of the same phase of the stars, when considered in pairs, have a negative mutual inductance.

## Patentansprüche

1. Einrichtung mit einer elektrischen Polyphasenmaschine von dem Typ, umfassend:
- eine elektrische Maschine (2), umfassend wenigstens:
- ein einen Magnetschaltkreis bildendes Gehäuse (3) aus ferromagnetischem Material,
- eine Leiterdrahtwicklung, umfassend wenigstens ein Wicklungselement pro Phase, wobei die Wicklungselemente angepasst sind, um untereinander gemäß einer sternförmigen Struktur angeschlossen zu werden, wobei die Wicklung wenigstens zwei Gruppen von unterschiedlichen Wicklungselementen, bezeichnet als Sterne (13, 14), umfasst, für jede Phase jeweils umfassend einen Wicklungsstrang (4u, 4v, 4w, 5u, 5v, 5w, 33u-w, 34u-w, 35u-w), bestehend wenigstens aus einem Wicklungselement, wobei die Wicklungsstränge jedes Sterns untereinander gemäß einer sternförmigen Struktur angeschlossen sind,
- Steuervorrichtung, umfassend eine Vielzahl von Wechselrichtern (6, 7, 36, 37, 38), die angepasst sind, um:
- mit Gleichstrom oder gleichgerichtetem Strom versorgt wird,
- von einer verschachtelten Steuerung (8, 9) gesteuert zu werden, die in der Impulsbreite in einer zwischen den Wechselrichtern identischen Pendelfrequenz moduliert zu werden,
- an ihren Phasenausgängen (10u, 10v, 10w; 11u, 11v, 11w) ein alternatives Spannungssignal einer fundamentalen Frequenz, Amplitude und Phase zu liefern, die zwischen den homologen Phasenausgängen jedes Wechselrichters identisch sind,
wobei jeder Stern durch wenigstens einen zugeordneten Wechselrichter versorgt ist, der durch seine jeweiligen Phasenausgänge an einen Phasenschaltkreis angeschlossen ist, der die jeweiligen Wicklungsstränge des Sterns umfasst,
**dadurch gekennzeichnet, dass** die Phasenschaltkreise (15u, 16u) für jedes Sternenpaar in Serie mit den homologen Wicklungssträngen der genannten Sterne, jeweils der primäre und der sekundäre eines eine negative Kopplung zwischen dem primären und dem sekundären aufweisenden Kopplungstransformators (17, 18, 19) umfassen, wobei die genannte Kopplung angepasst ist, um in Kombination mit der jeweiligen Kopplung der homologen Wicklungsstränge der genannten Sterne eine resultierende negative gegenseitige Induktivität zu bilden.

2. - Einrichtung (1) mit einer elektrischen Polyphasenmaschine von dem Typ, umfassend:
- eine elektrische Maschine (2), umfassend wenigstens:
- ein einen Magnetschaltkreis bildendes Gehäuse (3) aus ferromagnetischem Material,
- eine Leiterdrahtwicklung, umfassend wenigstens ein Wicklungselement pro Phase, wobei die Wicklungselemente angepasst sind, um untereinander gemäß einer sternförmigen Struktur angeschlossen zu werden, wobei die Wicklung wenigstens zwei Gruppen von unterschiedlichen Wicklungselementen, bezeichnet als Sterne (13, 14), umfasst, für jede Phase jeweils umfassend einen Wicklungsstrang (4u, 4v, 4w, 5u, 5v, 5w, 33u-w, 34u-w, 35u-w), bestehend wenigstens aus einem Wicklungselement, wobei die Wicklungsstränge jedes Sterns untereinander gemäß einer sternförmigen Struktur angeschlossen sind,
- Steuervorrichtung, umfassend eine Vielzahl von Wechselrichtern (6, 7, 36, 37, 38), die angepasst sind, um:
- mit Gleichstrom oder gleichgerichtetem Strom versorgt zu werden,
- von einer verschachtelten Steuerung (8, 9) gesteuert zu werden, die in der Impulsbreite in einer zwischen den Wechselrichtern identischen Pendelfrequenz moduliert zu werden,
- an ihren Phasenausgängen (10u, 10v, 10w; 11u, 11v, 11w) ein alternatives Spannungssignal einer fundamentalen Frequenz, Amplitude und Phase zu liefern, die zwischen den homologen Phasenausgängen jedes Wechselrichters identisch sind,
wobei jeder Stern durch wenigstens einen zugeordneten Wechselrichter versorgt ist, der durch seine jeweiligen Phasenausgänge direkt an die jeweiligen Wicklungsstränge der Sterne der elektrischen Maschine angeschlossen ist,
**dadurch gekennzeichnet, dass** die elektrische Maschine (2) ein Spannungswandler ist, umfassend:
- ein ferromagnetisches Gehäuse (3), umfassend
- einen intermediären Kern pro Phase, umfassend eine Vielzahl von primären Kernen (21), die durch ein intermediäres Joch (22) an einen sekundären Kern (23) angeschlossen sind,
- ein primäres Joch (20), das einen primären magnetischen Schaltkreis schließt, der aus primären Kernen aller Phasen des Gehäuses gebildet wird,
- ein sekundäres Joch (24), das einen sekundären magnetischen Schaltkreis schließt, der aus sekundären Kernen aller Phasen des Gehäuses gebildet wird,
- eine Leiterdrahtwicklung, umfassend
- wenigstens eine sekundäre Wicklung (25) pro Phase, die um jeden sekundären Kern gewickelt ist, von dem ein Ende an die anderen sekundären Wicklungen in einem gemeinsamen Nullleiter verbunden ist und das andere Ende an einen Ausgang (26) des Transformators verbunden ist,
- eine primäre Wicklung (27uvw, 28uvw) pro Phase und pro Wechselrichter (6, 7), der um einen primären Kern (21) der entsprechenden Phase aufgewickelt ist, wobei die primären Wicklungen gemäß einer und derselben Wickelrichtung auf ihrem Kern gewickelt sind und die primären Wicklungen der Phasen eines und desselben Wechselrichters durch ein Ende in einem gemeinsamen Nullleiter verbunden sind und durch das andere Ende an den jeweiligen Phasenausgängen (10uvw, 11vw) der Wechselrichter derart, dass die homologen Wicklungsstränge der Sterne jeweils zu zweit eine gegenseitige negative Induktivität aufweisen.
